# FASCICULE DE BREVET EUROPEEN

(11) **EP 0 817 232 B1**
(45) Date de publication et mention de la délivrance du brevet: **12.10.2005**
(21) Numéro de dépôt: 97410069.5
(22) Date de dépôt: 01.07.1997
(51) Int. Cl.: H01J 9/50, H01J 9/02

(54) **Procédé de régénération de micropointes d'un écran plat de visualisation**
Verfahren zur Regenerierung von Mikrospitzen einer flachen Anzeigetafel
Process for regenerating microtips of a flat panel display

(30) Priorité: 02.07.1996 FR 9608487
(43) Date de publication de la demande: 07.01.1998
(73) Titulaire: Le Commissariat à l'Energie Atomique, 750157 Paris (FR)
(72) Inventeur: Bancal, Bernard, 13080 Luynes (FR)
(74) Mandataire: de Beaumont, Michel

(56) Documents cités:
- EP-A- 0 494 425
- EP-A- 0 714 114
- FR-A- 2 201 533
- US-A- 3 763 346
- F.HASSELBACH ET AL.: "MICROPROCESSOR-AIDED REMOULDING OF FIELD EMITTERS" JOURNAL OF PHYSICS E.SCIENTIFIC INSTRUMENTS, vol. 17, no. 9, septembre 1984, pages 782-787, XP002027775
- DAS J H ET AL: "MICROMACHINED FIELD EMISSION CATHODE WITH AN INTEGRATED HEATER" JOURNAL OF VACUUM SCIENCE AND TECHNOLOGY: PART B, vol. 13, no. 6, 1 novembre 1995, pages 2432-2435, XP000558316

## Description

La présente invention concerne un écran plat de visualisation à micropointes.

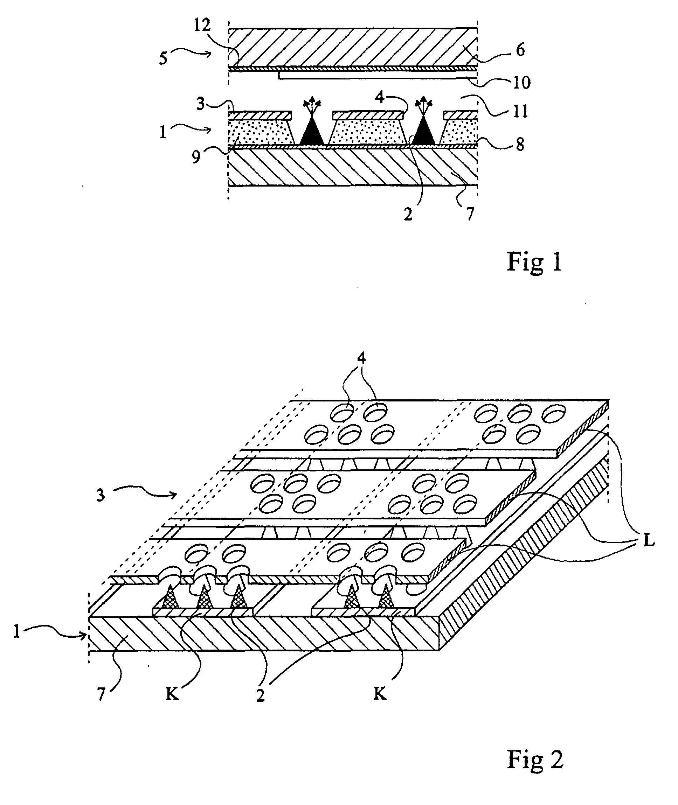

La figure 1 représente, partiellement et en coupe, la structure d'un écran plat à micropointes du type auquel se rapporte l'invention.

Un tel écran est essentiellement constitué d'une cathode 1 à micropointes 2 et d'une grille 3 pourvue de trous 4 aux emplacements des micropointes 2. La cathode 1 est placée en regard d'une anode cathodoluminescente 5 dont un substrat de verre 6 constitue la surface d'écran.

Le principe de fonctionnement et le détail de la constitution d'un tel écran à micropointes sont décrits dans le brevet américain numéro 4 940 916 du Commissariat à l'Energie Atomique.

La cathode 1 est constituée, sur un substrat de verre 7, de conducteurs de cathode 8 organisés en colonnes. Ces conducteurs 8 sont généralement revêtus d'une couche résistive (non représentée) d'homogénéisation de l'émission électronique. La cathode 1 est associée à la grille 3 avec interposition d'une couche 9 pour isoler les conducteurs de cathode 8 de la grille 3. Les trous 4 sont pratiqués dans les couches de grille 3 et d'isolement 9 pour recevoir les micropointes 2 qui sont formées sur la couche résistive. La grille 3 est organisée en rangées, l'intersection d'une rangée et d'une colonne de la cathode définissant un pixel.

Ce dispositif utilise le champ électrique créé entre la cathode 1 et la grille 3 pour que des électrons soient extraits des micropointes 2 vers des éléments luminophores 10 de l'anode 5 en traversant un espace vide 11. Les éléments luminophores 10 sont déposées sur des électrodes 12, constituées d'une couche conductrice transparente telle que de l'oxyde d'indium et d'étain (ITO).

Dans le cas d'un écran couleur, l'anode 5 est pourvue de bandes alternées d'éléments luminophores 10 correspondant chacune à une couleur (Rouge, Vert, Bleu). Chaque bande est électriquement isolée des deux bandes qui lui sont voisines. Les bandes sont disposées parallèlement aux colonnes 8 de cathode, un groupe de trois bandes (une par couleur) étant en regard d'une colonne de cathode. Les ensembles de bandes rouges, vertes, bleues sont sélectivement polarisés par rapport à la cathode 1, pour que les électrons extraits des micropointes 2 d'un pixel de la cathode/grille soient sélectivement dirigés vers les éléments luminophores 10 en vis à vis de chacune des couleurs.

Dans le cas d'un écran monochrome, l'anode est généralement constituée d'un plan d'élément luminophores ou de deux ensembles de bandes alternées de même couleur.

La figure 2 représente partiellement une cathode à micropointes d'émission électronique associée à une grille d'extraction des électrons émis, pour illustrer l'adressage de la cathode et de la grille pendant le fonctionnement d'un écran à micropointes. L'anode (5, figure 1) et la couche d'isolement (9, figure 1) entre la cathode 1 et la grille 3 n'ont pas été représentées pour des raisons de clarté. De même, seules quelques micropointes 2 ont été représentées à l'intersection d'une rangée L de la grille 3 et d'une colonne K de la cathode 1. En pratique, ces micropointes sont au nombre de plusieurs milliers par pixel d'écran.

L'affichage d'une image s'effectue pendant un temps de trame (par exemple 20 ms) en polarisant convenablement l'anode, la cathode 1 et la grille 3 au moyen d'un circuit électronique de commande (non représenté). Pour un écran couleur, les ensembles de bandes d'éléments luminophores (10, figure 1) sont séquentiellement portés à un potentiel permettant d'attirer les électrons. Ce potentiel est fonction de la distance (espace vide 11) qui sépare la cathode/grille de l'anode et est, par exemple, supérieur à 300 volts. Les bandes 10 sont polarisées, durant une trame, par ensembles de bandes d'une même couleur, soit pendant une durée de sous-trame correspondant au tiers du temps de trame (par exemple 6,6 ms). L'affichage s'effectue ligne par ligne, en polarisant séquentiellement (par exemple, à 80 volts) les rangées L pendant une durée (par exemple 30 µs) correspondant à la durée d'une sous-trame divisée par le nombre de rangées de la grille 3. Pendant qu'une rangée L est polarisée, les colonnes K sont portées à des potentiels respectifs compris entre un potentiel d'émission maximale et un potentiel d'absence d'émission (par exemple, respectivement 0 et 30 volts), pour fixer la brillance des pixels définis par l'intersection de ces colonnes et de la rangée considérée. La polarisation des colonnes K change à chaque nouvelle rangée L du balayage ligne. Le choix des valeurs des potentiels de polarisation est lié aux caractéristiques des éléments luminophores 10 et des micropointes 2. Classiquement, en dessous d'une différence de potentiel de 50 volts entre la cathode 1 et la grille 3 il n'y a pas d'émission électronique, et l'émission maximale correspond à une différence de potentiel de 80 volts.

Les micropointes voient leur pouvoir émissif diminuer au fur et à mesure de leur utilisation. Les écrans ont donc une brillance qui décroît dans le temps. Cette décroissance est suffisamment importante pour ne pas être négligeable et influe sur la durée de vie de l'écran.

La présente invention vise à proposer un procédé de régénération des micropointes selon la revendication 1 qui permette de leur redonner leur pouvoir émissif d'origine.

La présente invention vise également à proposer un procédé de commande d'un écran à micropointes qui permette d'accroître la durée de vie de l'écran.

Pour atteindre ces objets, la présente invention prévoit un procédé de régénération de micropointes d'un écran plat de visualisation comportant une cathode à micropointes associée à une grille d'extraction d'électrons, consistant à faire émettre les micropointes sous une densité de courant nettement supérieure à une densité de courant nominale de fonctionnement en appliquant, entre la grille et la cathode, et pendant une durée nettement supérieure à une durée nominale d'adressage en fonctionnement, une différence de potentiels nettement supérieure à des différences nominales de potentiels de fonctionnement.

Selon un mode de réalisation de la présente invention, on polarise la grille à un potentiel de régénération nettement supérieur à un potentiel nominal de fonctionnement et on polarise la cathode à un potentiel nominal correspondant à une émission maximale.

Selon un mode de réalisation de la présente invention où la grille est organisée en rangées perpendiculaires à des colonnes de la cathode, l'affichage s'effectuant en adressant séquentiellement les rangées de grille pendant ladite durée nominale et en adressant individuellement les colonnes de la cathode pendant la durée nominale d'adressage d'une rangée, on polarise au moins une rangée de grille au potentiel de régénération et toutes les colonnes de cathode audit potentiel d'émission maximale pendant une durée de régénération nettement supérieure à ladite durée nominale.

Selon un mode de réalisation de la présente invention, on polarise simultanément toutes les rangées de la grille au potentiel de régénération.

Selon un mode de réalisation de la présente invention, on adresse la ou les rangées de la grille au moyen d'un signal comprenant des impulsions d'une durée nettement supérieure à ladite durée nominale, l'écart entre deux impulsions successives étant nettement supérieur à la durée d'une impulsion.

Selon un mode de réalisation de la présente invention, on polarise la cathode à un potentiel de régénération nettement inférieur à un potentiel nominal correspondant à une émission maximale en fonctionnement et on polarise la grille à un potentiel nominal de fonctionnement.

Une autre mode de réalisation concerne également un procédé de commande d'un écran plat de visualisation comportant une cathode à micropointes d'émission électronique, associée à une grille d'extraction d'électrons émis par les micropointes et à une anode cathodoluminescente qui consiste à effectuer périodiquement un cycle de régénération.

La présente invention concerne également un écran plat de visualisation comportant une cathode à micropointes, associée à une grille d'extraction d'électrons et à une anode cathodoluminescente, comportant une première source de tension de polarisation de la grille, une deuxième source de tension de polarisation de la grille, et des moyens pour sélectionner la première source pendant un fonctionnement normal de l'écran et la deuxième source pendant un cycle de régénération des micropointes, la deuxième source délivrant une tension supérieure à celle délivrée par la première source.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 décrites précédemment sont destinées à exposer l'état de la technique et le problème posé ; et
la figure 3 représente, schématiquement et partiellement, un mode de réalisation d'un circuit de commande d'un écran selon la présente invention.

Pour des raisons de clarté, les mêmes éléments ont été désignés par les mêmes références aux différentes figures. Pour les mêmes raisons, seuls les éléments de l'écran qui sont nécessaires à la compréhension de l'invention ont été représentés aux figures et seront décrits par la suite.

Une caractéristique de la présente invention est de prévoir une commande particulière de l'écran pendant un cycle de régénération situé en dehors des phases d'affichage. Cette commande consiste à forcer les micropointes à émettre sous une forte densité de courant, en augmentant la différence de potentiel entre la cathode et la grille, pendant un temps relativement long par rapport à la durée classique d'affichage d'une trame d'image.

Selon un mode de réalisation préféré de l'invention, un cycle de régénération consiste à polariser les rangées L de la grille 3 (figure 2) à un potentiel de régénération nettement supérieur au potentiel nominal d'adressage des rangées. Pendant que les rangées L sont portées au potentiel de régénération, la cathode 1 est polarisée en adressant simultanément toutes les colonnes K au potentiel correspondant à la consigne d'éclairement maximale lorsque l'écran est en fonctionnement.

L'augmentation du potentiel de polarisation de la grille 3 permet d'augmenter le courant dans chaque pointe 2. Par exemple, pour un potentiel de régénération de 110 volts et un potentiel nominal de 80 volts, le courant dans une pointe augmente pratiquement d'un facteur 5 (Loi de Fowler et Nordheim).

Pour éviter que l'échauffement des éléments luminophores lié à l'émission électronique lors de la régénération endommage l'écran, la polarisation de la grille au potentiel de régénération est, de préférence, effectuée par un signal impulsionnel. La largeur des impulsions est nettement supérieure à la durée nominale de polarisation d'une rangée de la grille et l'écart entre deux impulsions successives est choisi pour laisser à l'écran le temps de refroidir avant l'apparition d'une nouvelle impulsion.

Par exemple, si la durée nominale de polarisation d'une rangée de la grille est d'environ 30 µs, les rangées seront polarisées, pendant la régénération, par des impulsions de l'ordre de 500 µs avec une période d'environ 10 ms. La quantité d'électrons passant dans une pointe pendant une impulsion, donc l'énergie dissipée par effet Joule, est ainsi considérablement plus importante que celle qui passe dans une pointe émettant pendant le fonctionnement de l'écran. Par exemple, pendant une impulsion de 500 µs et en tenant compte de l'augmentation du potentiel de polarisation de la grille 3, la quantité d'électrons qui passe dans une pointe augmente d'un facteur de l'ordre de 80 par rapport à une durée d'adressage de 30 µs.

La durée d'un cycle de régénération, c'est-à-dire, la durée de polarisation par le signal impulsionnel dépend du besoin de régénération. Cette durée est, par exemple, comprise entre 1 et 10 minutes.

On constate que la brillance d'un écran préalablement utilisé auquel on applique le procédé selon l'invention augmente, et que l'écran retrouve une brillance correspondant à sa brillance d'origine si la régénération est effectuée suffisamment longtemps. On suppose que le fort échauffement des micropointes lié à l'énergie considérablement plus importante qu'en fonctionnement normal, libère de la surface des micropointes, des produits issus de dégazages, en particulier des éléments luminophores de l'anode, pendant le fonctionnement de l'écran.

Le procédé selon l'invention est un procédé de restauration qui rétablit le pouvoir émissif des seules micropointes qui en ont besoin sans affecter les autres.

La diminution de la brillance due à la perte de pouvoir émissif des micropointes dépend, en effet, de leur durée d'utilisation et peut être irrégulière sur la surface de l'écran. Par exemple, en adressant une zone partielle déterminée de micropointes pendant un temps suffisamment long, puis en adressant toutes les colonnes de la cathode avec une consigne d'éclairement donnée, on constate alors que la brillance est plus faible dans la zone partielle que dans le reste de la surface de l'écran.

Après application du procédé de régénération selon l'invention, on observe en adressant toute la surface de l'écran que la brillance est homogène et au niveau d'origine, ce qui signifie que toutes les micropointes ont retrouvé leur pouvoir émissif d'origine quel que soit leur durée d'utilisation avant régénération.

Pendant un cycle de régénération, les électrons émis par les micropointes sont collectés par la grille si l'anode de l'écran n'est pas adressée. Si l'anode est adressée, ces électrons sont alors collectés par les électrodes de l'anode.

La mise en oeuvre du procédé de régénération selon l'invention s'effectue au moyen du circuit électronique classique de commande de l'écran.

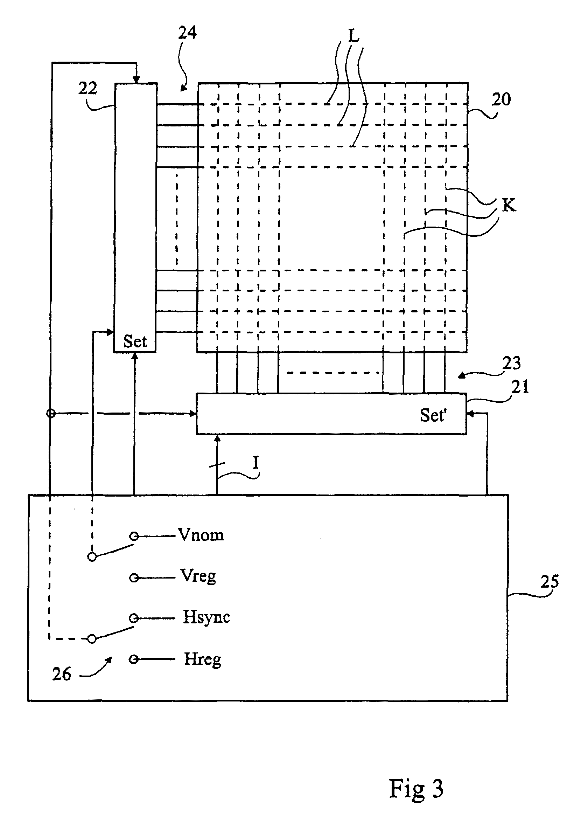

La figure 3 représente un mode de réalisation d'une portion d'un tel circuit servant à l'adressage de la cathode et de la grille. Chaque colonne K et chaque rangée L de l'écran 20 est individuellement reliée à une sortie d'un circuit d'adressage 21 ou 22 associé, respectivement, à la cathode 1 ou à la grille 3. Un circuit d'adressage comporte généralement autant de sorties qu'il y a de rangées ou de colonnes à adresser et les sorties des circuits 21 et 22 sont reliées par des connecteurs appropriés, respectivement 23 et 24, aux rangées L et aux colonnes K. Les circuits 21 et 22 sont, par exemple, constitués de registres à décalages à sorties parallèles. Les circuits 21 et 22 sont commandés par un bloc commun 25 servant également à commander l'adressage de l'anode (non représenté). Le circuit 21 reçoit du bloc 25 les consignes individuelles I de polarisation des colonnes K et est destiné à les polariser au rythme de la fréquence de balayage ligne Hsync. Le circuit 22 est destiné à décaler la polarisation de la grille, d'une rangée à la suivante au rythme de la fréquence de balayage ligne Hsync et reçoit, du circuit 25, outre le signal Hsync, une tension de polarisation nominale Vnom (par exemple, 80 volts).

Les circuits 21 et 22 comportent généralement, en outre, des entrées, respectivement Set et Set', permettant de forcer simultanément toutes les sorties à un même niveau.

Selon l'invention, on tire profit de la présence de cette entrée de forçage pour placer, pendant une impulsion d'un cycle de régénération, toutes les rangées de la grille 3 au potentiel de régénération et toutes les colonnes de la cathode 1 au potentiel nominal d'émission maximale. Ainsi, la mise en oeuvre de la présente invention ne nécessite pas de modification des circuits d'adressage classiques. Il suffit de modifier le bloc de commande 25 pour qu'il délivre, pendant les cycles de régénération, un signal d'horloge Hreg particulier permettant de respecter la commande impulsionnelle souhaitée et un potentiel Vreg de régénération, par exemple 110 volts. Le bloc 25 comporte des moyens de commutation 26 permettant de sélectionner, soit le signal Hsync et le potentiel Vnom, soit le signal Hreg et le potentiel Vreg.

La régénération des micropointes peut également être effectuée rangée par rangée en respectant un balayage ligne. De même, on peut effectuer une régénération par groupes de pixels de l'écran en n'adressant qu'un certain nombre de rangées et de colonnes.

Un avantage de la présente invention est qu'elle permet la mise en oeuvre d'une régénération des micropointes sans autre intervention qu'un déclenchement d'un cycle de commande particulier de l'écran.

Ainsi, on peut prévoir que l'utilisateur actionne un bouton de commande spécifique (non représenté) démarrant un cycle de régénération lorsqu'il constate que la brillance de l'écran diminue.

On peut également prévoir une régénération périodique automatique, hors fonctionnement de l'écran (par exemple, à l'allumage de l'écran), provoquée directement par le circuit de commande de l'écran au bout d'une durée de fonctionnement prédéterminée.

La durée d'un cycle de régénération (par exemple, de 1 à 10 minutes) est, de préférence, fixée pour être suffisamment longue pour obtenir une régénération complète en fonction de la fréquence des cycles de régénération. On notera cependant qu'une durée, supérieure au temps strictement nécessaire pour la régénération complète, n'est pas gênante dans la mesure où une fois qu'elles ont retrouvé leur pouvoir émissif d'origine, les micropointes ne sont pas affectées par la régénération.

Bien entendu, la présente invention est susceptible de diverses variantes et modifications qui apparaîtront à l'homme de l'art. En particulier, bien que l'on ait fait référence dans la description qui précède à une augmentation du potentiel de la grille, on pourra également prévoir de modifier le potentiel minimal d'adressage des colonnes de la cathode ou les deux. On notera également que l'invention s'applique également au cas où la consigne d'éclairement d'un pixel est fixée par modulation de largeur d'impulsion des signaux d'adressage des colonnes de la cathode.

De plus, la réalisation pratique des modifications à apporter au circuit de commande pour la mise en oeuvre de la présente invention est à la portée de l'homme de l'art à partir des indications fonctionnelles données ci-dessus. En outre, l'invention s'applique aussi bien à un écran couleur qu'à un écran monochrome.

## Revendications

1. Procédé de régénération de micropointes (2) d'un écran plat de visualisation comportant une cathode (1) à micropointes (2) associée à une grille (3) d'extraction d'électrons, **caractérisé en ce qu'**il consiste à faire émettre les micropointes (2) sous une densité de courant nettement supérieure à une densité de courant nominale de fonctionnement en appliquant, entre la grille (3) et la cathode (1), et pendant une durée nettement supérieure à une durée nominale d'adressage en fonctionnement, une différence de potentiels nettement supérieure à des différences nominales de potentiels de fonctionnement.

2. Procédé de régénération selon la revendication 1, **caractérisé en ce qu'**il consiste à polariser la grille (3) à un potentiel de régénération (Vreg) nettement supérieur à un potentiel nominal (Vnom) de fonctionnement et à polariser la cathode (1) à un potentiel nominal correspondant à une émission maximale.

3. Procédé de régénération selon la revendication 2, dans lequel la grille (3) est organisée en rangées (L) perpendiculaires à des colonnes (K) de la cathode (1), l'affichage s'effectuant en adressant séquentiellement les rangées de grille (L) pendant ladite durée nominale et en adressant individuellement les colonnes (K) de la cathode pendant la durée nominale d'adressage d'une rangée (L), **caractérisé en ce qu'**il consiste à polariser au moins une rangée de grille (L) au potentiel de régénération (Vreg) et toutes les colonnes de cathode (K) audit potentiel d'émission maximale pendant une durée de régénération nettement supérieure à ladite durée nominale.

4. Procédé de régénération selon la revendication 3, **caractérisé en ce qu'**il consiste à polariser simultanément toutes les rangées (L) de la grille (3) au potentiel de régénération.

5. Procédé de régénération selon la revendication 3 ou 4, **caractérisé en ce qu'**il consiste à adresser la ou les rangées (L) de la grille (3) au moyen d'un signal (Hreg) comprenant des impulsions d'une durée nettement supérieure à ladite durée nominale, l'écart entre deux impulsions successives étant nettement supérieur à la durée d'une impulsion.

6. Procédé de régénération selon la revendication 1, **caractérisé en ce qu'**il consiste à polariser la cathode (1) à un potentiel de régénération nettement inférieur à un potentiel nominal correspondant à une émission maximale en fonctionnement et à polariser la grille (3) à un potentiel nominal de fonctionnement (Vnom).

7. Procédé de commande d'un écran plat de visualisation comportant une cathode (1) à micropointes (2) d'émission électronique, associée à une grille (3) d'extraction d'électrons émis par les micropointes (2) et à une anode (5) cathodoluminescente, **caractérisé en ce qu'**il consiste à mettre en oeuvre le procédé de régénération selon l'une quelconque des revendications 1 à 6.

8. Procédé de commande selon la revendication 7, **caractérisé en ce qu'**il consiste à effectuer périodiquement un cycle de régénération.

9. Écran plat de visualisation comportant une cathode (1) à micropointes (2), associée à une grille (3) d'extraction d'électrons et à une anode (5) cathodoluminescente, **caractérisé en ce qu'**il comporte :
une première source de tension de polarisation (Vnom) de la grille (3) ;
une deuxième source de tension de polarisation (Vreg) de la grille (3) ; et
des moyens (26) pour sélectionner la première source pendant un fonctionnement normal de l'écran et la deuxième source pendant un cycle de régénération des micropointes (2), la deuxième source délivrant une tension supérieure à celle délivrée par la première source.

## Patentansprüche

1. Verfahren zum Regenerieren von Mikrospitzen (2) eines Flachbildschirms, der eine Kathode (1) mit Mikrospitzen (2) aufweist, die einen Gitter (3) für das Extrahieren von Elektronen zugeordnet sind, **dadurch gekennzeichnet, dass** es die folgenden Schritte aufweist: zwischen dem Gitter (3) und der Kathode (1) und für eine Dauer wesentlich höher als eine nominale Adressierdauer bzw. eine Nennadressierdauer im Betrieb, Anlegen eines wesentlich höheren Spannungsdifferentials als ein nominales Betriebsspannungsdifferential bzw. ein Nennbetriebsspannungsdifferential zum Veranlassen, dass die Mikrospitzen (2) mit einer Stromdichte emittieren, die wesentlich höher ist als eine nominale Betriebsstromdichte bzw. Nennbetriebsstromdichte.

2. Regenerationsverfahren nach Anspruch 1, **dadurch gekennzeichnet, dass** es aus dem Vorspannen des Gitters (3) auf ein Regenerationspotential (Vreg) besteht, das wesentlich größer ist als ein Nennbetriebspotential (Vnom), und aus dem Vorspannen der Kathode (1) auf ein Nennpotential, das einer maximalen Emission entspricht.

3. Regenerationsverfahren nach Anspruch 2, wobei das Gitter (3) in Reihen (L) senkrecht zu Spalten (K) der Kathode (1) organisiert ist, wobei die Anzeige durchgeführt wird durch sequentielles Adressieren der Gitterreihen (L) während der Nenndauer und durch individuelles Adressieren der Kathodenspalten (K) während der Nennadressierzeit einer Reihe (L), **dadurch gekennzeichnet, dass** es besteht aus dem Vorspannen von zumindest einer Gitterreihe (L) auf das Regenerationspotential (Vreg) und aller Kathodenspalten (K) auf das maximale Emissionspotential während einer Regenerationsdauer, die wesentlich größer ist als die Nenndauer.

4. Regenerationsverfahren nach Anspruch 3, **dadurch gekennzeichnet, dass** es besteht aus dem simultanen Vorspannen all der Reihen (L) des Gitters (3) auf das Regenerationspotential.

5. Regenerationsverfahren nach Anspruch 3 oder 4, **dadurch gekennzeichnet, dass** es besteht aus dem Adressieren der Reihe(n) (L) des Gitters (3) mittels eines Signals (Hreg), das Pulse aufweist von einer Dauer, die wesentlich größer ist als die Nenndauer, wobei das Intervall zwischen aufeinanderfolgenden Pulsen wesentlich größer ist als die Dauer eines Pulses.

6. Regenerationsverfahren nach Anspruch 1, **dadurch gekennzeichnet, dass** es besteht aus dem Vorspannen der Kathode (1) auf ein Regenerationspotential, das wesentlich geringer ist als ein Nennpotential, das einer maximalen Emission im Betrieb entspricht, und aus dem Vorspannen des Gitters (3) auf ein Nennbetriebspotential (Vnom).

7. Verfahren zum Steuern eines Flachbildschirms, der eine Kathode (1) mit elektronischen Emissionsmikrospitzen (2) aufweist, die einem Gitter (3) zugeordnet sind, und zwar für das Extrahieren von Elektronen, die durch die Mikrospitzen (2) emittiert werden, und mit einer Kathodolumineszenzanode (5), **dadurch gekennzeichnet, dass** es besteht aus dem Ausführen des Regenerationsverfahrens gemäss einem der Ansprüche 1 bis 6.

8. Steuerverfahren nach Anspruch 7, **dadurch gekennzeichnet, dass** es besteht aus dem periodischen Durchführen eines Regenerationszyklus.

9. Flachbildschirm, der eine Kathode (1) mit Mikrospitzen (2) aufweist, die einem Gitter (3) zugeordnet sind für das Extrahieren von Elektronen, und mit einer Kathodolumineszenzanode (5), **dadurch gekennzeichnet, dass** er folgendes aufweist:
eine erste Spannungsquelle (Vnom) für das Vorspannen des Gitters (3);
eine zweite Spannungsquelle (Vreg) für das Vorspannen des Gitters (3); und Mittel (26) für das Auswählen der ersten Quelle während eines normalen Schirmbetriebs und für das Auswählen der zweiten Quelle während eines Regenerationszyklus der Mikrospitzen (2), wobei die zweite Quelle eine Spannung ausgibt, die größer ist als jene, die von der ersten Quelle ausgegeben wird.

## Claims

1. A method for regenerating microtips (2) of a flat display screen including a cathode (1) with microtips (2) associated with a grid (3) for extracting electrons, **characterized in that** it comprises the step of applying, between the grid (3) and the cathode (1), and for a duration substantially higher than a nominal addressing duration in operation, a substantially higher voltage differential than nominal operating voltage differentials, for causing the microtips (2) to emit with a current density substantially greater than a nominal operating current density.

2. A regeneration method according to claim 1, **characterized in that** it consists of biasing the grid (3) at a regeneration potential (Vreg) substantially greater than a nominal operation potential (Vnom) and of biasing the cathode (1) at a nominal potential corresponding to a maximum emission.

3. A regeneration method according to claim 2, wherein the grid (3) is organized in rows (L) perpendicular to columns (K) of the cathode (1), the display being performed by sequentially addressing the grid rows (L) during the nominal duration and by individually addressing the cathode columns (K) during the nominal addressing time of a row (L), **characterized in that** it consists of biasing at least one grid row (L) at the regeneration potential (Vreg) and all cathode columns (K) at the maximum emission potential during a regeneration duration substantially greater than the nominal duration.

4. A regeneration method according to claim 3, **characterized in that** it consists of simultaneously biasing all the rows (L) of the grid (3) at the regeneration potential.

5. A regeneration method according to claim 3 or 4, **characterized in that** it consists of addressing the row(s) (L) of the grid (3) by means of a signal (Hreg) including pulses of a duration substantially greater than the nominal duration, the interval between two successive pulses being substantially greater than the duration of a pulse.

6. A regeneration method according to claim 1, **characterized in that** it consists of biasing the cathode (1) at a regeneration potential substantially lower than a nominal potential corresponding to a maximum emission in operation and of biasing the grid (3) at a nominal operation potential (Vnom).

7. A method for controlling a flat display screen including a cathode (1) with electronic emission microtips (2), associated with a grid (3) for extracting electrons emitted by the microtips (2) and with a cathodoluminescent anode (5), **characterized in that** it consists of implementing the regeneration method according to any of claims 1 to 6.

8. A control method according to claim 7, **characterized in that** it consists of periodically performing a regeneration cycle.

9. A flat display screen including a cathode (1) with microtips (2), associated with a grid (3) for extracting electrons and with a cathodoluminescent anode (5), **characterized in that** it includes:
a first voltage source (Vnom) for biasing the grid (3);
a second voltage source (Vreg) for biasing the grid (3); and
means (26) for selecting the first source during normal screen operation and for selecting the second source during a regeneration cycle of the microtips (2), the second source issuing a voltage greater than that issued by the first source.
